# EUROPEAN PATENT APPLICATION

(11) **EP 2 317 667 A2**
(43) Date of publication of application: **04.05.2011**
(21) Application number: 10189642.1
(22) Date of filing: 02.11.2010
(51) Int. Cl.: H04B 7/06, H04B 17/00

(54) **System and method for controlling phase difference in a mobile communication network**

(30) Priority: 02.11.2009 ES 200930940
(71) Applicant: Vodafone Group PLC, Newbury Berkshire RG14 2FN (GB); Vodafone España, S.A.U., 28108 Alcobendas (ES)
(72) Inventor: De Pasquale, Andrea, E-28050 Madrid (ES); Exadaktylos, Kyriakos, E-28050 Madrid (ES); Alcazar Viguera, Esperanza, 28050 Madrid (ES); Diaz Mateos, Maria, 28050 Madrid (ES); Garriga Muñiz, Beatriz, E-28050 Madrid (ES); Dominguez Romero, Francisco, E-28050 Madrid (ES); McWilliams, Brendan, E-28050 Madrid (ES); Urbano Ruiz, Julio, E-28050 Madrid (ES); Serrano Solsana, Clara, E-28050 Madrid (ES); López Roman, Javier, E-28050 Madrid (ES); García Viñas, Aitor, E-28050 Madrid (ES); Tenorio Sanz, Santiago, E-28050 Madrid (ES); Le Pezennec, Yannick, E-28050 Madrid (ES)
(74) Representative: Keston, David Arthur

(57) **Abstract**

A system and method are described for detecting and controlling the phase difference introduced to radio signals by transmission branches (330,360) of a transmission system in a mobile communication network. Periodically a calibration signal (320) is generated at an input of the transmission branches (330,360) during a phase calibration mode. The phase difference introduced by the two transmission branches is detected by detecting the phase difference between the calibration signal, which has at least partly passed through the first transmission branch and the calibration signal, which has at least partly passed through the second transmission branch. The phase difference between the radio signals is controlled based on the detected phase difference.

## Description

### BACKGROUND OF THE INVENTION

### Technical field

The present invention relates to a transmission system for use in a mobile communication network and more specifically to the detection and control of the phase difference introduced by transmission branches of such a transmission system.

### Description of related art

HSDPA (High Speed Downlink Packet Access) is a packet-based data service in 3rd generation (3G) W-CDMA (Wideband Code Division Multiple Access) systems, which provides high-speed data transmission (with different download rates e.g. 7.2/10.8/16.2/21.6/28.8 Mbps over a 5 MHz bandwidth) to support multimedia services.

In order to reach the highest peak rates (28.8 Mbps with 3GPP Release), the MIMO (Multiple Input Multiple Output) feature is used in HSDPA, in which multiple antennas are implemented at both base station (Node B) and mobile terminals (UE: User Equipment).

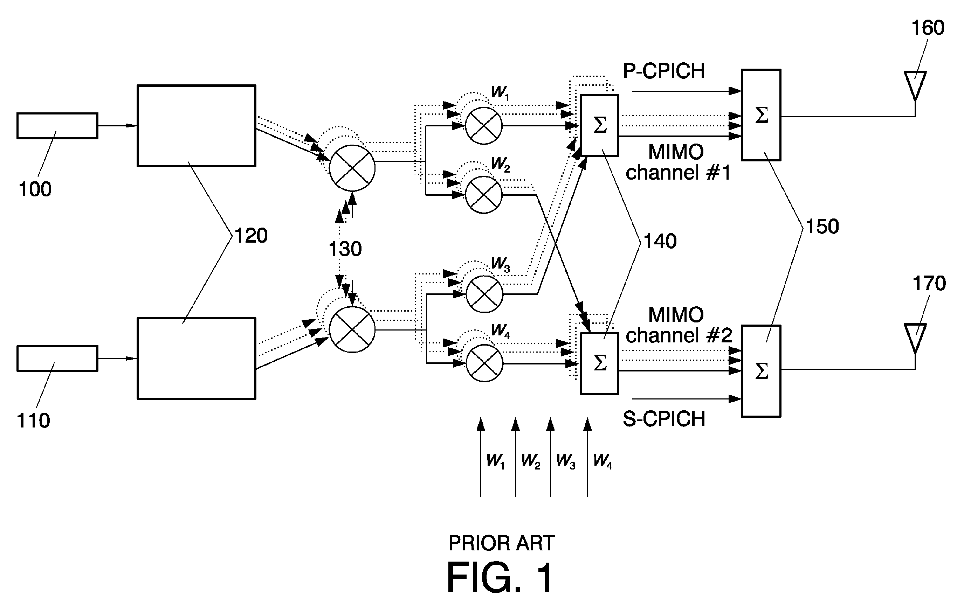

The basic MIMO feature as standardised in 3GPP Release 7 is based on two transmitter antennas (at the node B) and two receiving antennas (at the UE) using a common carrier. At the transmitter, the transmitted data is divided into 2 data streams and transmitted through the two antennas using the same radio resource (i.e. same transmission time interval and HSDPA codes). A generic downlink transmitter structure to support MIMO operation according to figure 8.1 of 3GPP TR 25.876 V7.0.0 (2007-03) is shown in figure 1. The primary and secondary transport block 100, 110 are each processed 120 (channel coding and interleaving), then spread 130, subsequently weighted by precoding weights w1, w2, w3, w4. Finally, there is an adding operation 140 resulting in MIMO channel#1 and MIMO channel#2. MIMO channel#1 and MIMO channel#2 are added 150 to P-CPICH and S-CPICH, respectively before being provided via non-shown transmission branches to the first physical antenna 160 and second physical antenna 170.

The two streams of data are recovered by the UE from the signals received via its 2 antennas (Rx Diversity). Thus, for the MIMO feature to work both the network and the terminals need to be MIMO-enabled. In order to deploy MIMO and transmit two parallel data streams, two power amplifiers are required per sector (one for each of the two antennas). In order not to use an entire carrier for MIMO only (5MHz), it is more efficient and practical to use the same carrier for MIMO devices as used for non-MIMO devices, such as HSDPA legacy terminals.

MIMO technology is an important step in the evolution of HSDPA, as it provides higher data rates in downlink whilst further improving spectrum efficiency.

When introducing MIMO in a system, it is indispensable to have 2 transmission branches (RF chains), including 2 power amplifiers each one connected to the physical antenna. In order to optimise the usage of the power resource it is highly desirable to balance the power between the 2 power amplifiers. Whilst MIMO channels are intrinsically perfectly power balanced, all the remaining channels need to be transmitted with equal power by each power amplifier. To this end, two techniques can be used: a first one is the use of transmission diversity (using "Space Time Transmit Diversity" (STTD) for all non-MIMO channels except for the Synchronisation Channel for which "Time Switch Transmit Diversity" (TSTD) is used). Another technique is referred to as Virtual Antenna Mapping (VAM) in this description and is discussed herein after.

Another key requirement is to make sure that the technique used to power balance the non-MIMO channels allows the same performance to be obtained as would be achieved with the same energy and a single power amplifier. STTD was defined by 3GPP (Release '99) in order to achieve this. However in practice this feature has been found to affect the performance of legacy users. In particular HSDPA users with equaliser receivers can be severely impacted. This is due to the time transformation which is performed by STTD, which is not suited for an optimum equalisation process. Some HSDPA devices have been found to deactivate their equaliser for this reason. Field tests have shown that the impact of the use of STTD on the throughput of data received by an HSDPA category 8 device (which has a type 2 receiver i.e. a single antenna equalizer receiver) is particularly negative under good and medium radio conditions.

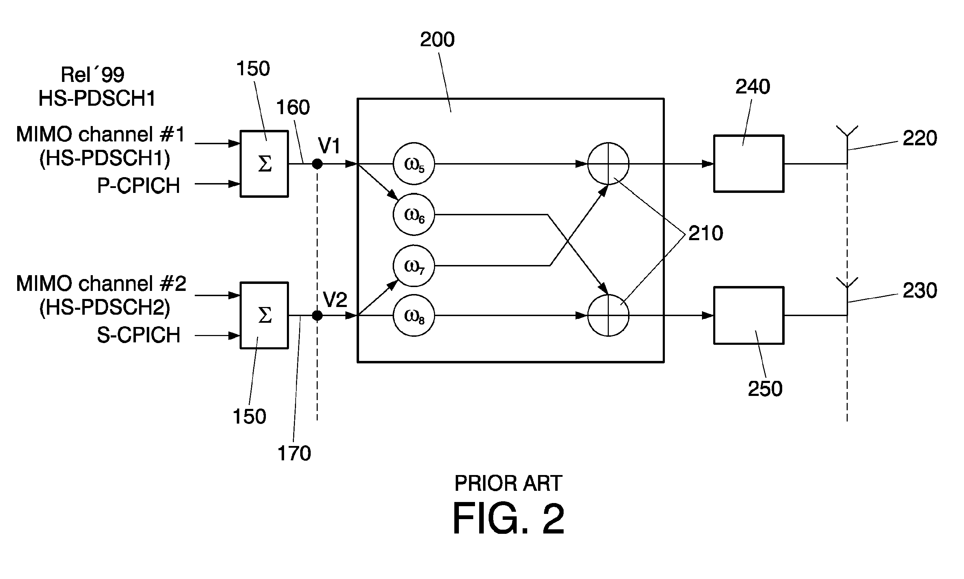

Virtual Antenna Mapping is an alternative which is aimed at solving this issue fulfilling both above-mentioned requirements. Hence, this technique enables to power balance the power amplifiers whilst not impacting on the performance of legacy users. The principle of the VAM technique is depicted in figure 2. The VAM operation/function 200 is performed as a baseband function after the MIMO operation shown in figure 1. The signals shown at the input of adding operations 150 are the following: Rel'99 refers to the dedicated channel (DCH) which can carry voice or data traffic. HS-PDSCH1 refers to HSDPA SIMO (Single Input Multiple Output, i.e. HSDPA without MIMO). MIMO Channel #1 is the first MIMO HSDPA channel HS-PDSCH1 and MIMO Channel #2 is the second MIMO HSDPA channel HS-PDSCH2. VAM consists of mapping input signals onto the physical antennas with specific weights for each path. VAM can be seen as a matrix of 4 weights w₅,w₆,w₇,w₈ and two adders 210 applied to 2 input signals fed by "virtual antennas" 160, 170 corresponding to the physical antennas depicted in figure 1, showing the MIMO operation. The force of the virtual antenna concept is that the UE behaves as if the signals present at the virtual antennas are the ones actually transmitted, although the physical antennas radiate something different. The legacy UE (not supporting MIMO) will only see the virtual antenna 160. Whilst its signal will be transmitted on both physical antennas the UE receiver will act as if transmitted from one (the mapping between virtual and physical antennas is transparent for the user equipment). The configuration received by the legacy user is the same as in a single antenna transmission system, the user equipment is not configured for any form of transmit diversity at RRC level. The MIMO UE will see both virtual antenna 160 and virtual antenna 170 and is unaware of the mapping between the virtual and physical antennas, which is transparent to the MIMO operation.

The 4 weights from the VAM matrix are differentiated *by phases only* as equal amplitude is required to achieve power balancing between the 2 physical antennas 220,230. A first power amplifier 240 and a second power amplifier 250 are configured for amplifying the output signals of the VAM function before they are radiated by the antennas 220,230. The weights of the VAM matrix are fixed. They are configured to the cell and set by Operation & Maintenance (O&M) and typically not changed very often. The VAM weights fulfil totally different objectives than the MIMO precoding weights - the latter ones being variable weights (that can change every 2 ms) used only for the purpose of the MIMO transmission whilst VAM applies to all channels and has as objective to fulfil the 2 requirements highlighted above.

From the legacy user point of view the VAM technique is like a single antenna transmission, i.e. the user terminal demodulates the HSDPA signal as if there were no Transmission diversity in the system. Seen from the transmit side for legacy non-MIMO users, VAM amounts to transmitting the same signal (common channel, Rel'99 and HSDPA non-MIMO) on the two transmit antenna ports but with a different phase. Indeed the phase between the two signals acts on the resulting polarization of the signal and affects the performance of HSDPA. Whilst this fixed phase offset between the two transmit ports can improve performance of legacy HSPA users (e.g. 90° phase offset as explained in co-pending Spanish Patent application 200930517), other phase shifts could actually worsen performance of legacy users. Hence the capability of controlling the phases between the two transmit branches is essential when introducing MIMO with VAM. As discussed herein above, for MIMO transmission with VAM a unitary 2x2 phase matrix (4 fixed weights) is applied: 2 phase weights for the primary MIMO stream led by the primary Pilot (same weights as common channels, Rel'99, and HSDPA non-MIMO), and 2 phase weights for the secondary MIMO stream led by the secondary Pilot. In order to achieve the same performance as without VAM with MIMO, the VAM matrix needs to be designed in such a way as to ensure that the MIMO#1 and MIMO#2 channels are independent channels. Hence the weights selected for the VAM matrix is a result of a trade-off between legacy user performance, MIMO performance, as well as power balancing requirements.

The control of the phase difference between the 2 transmit branches, i.e. up to the physical antenna ports, has not been a requirement in base station radio design until the introduction of MIMO. The accuracy in terms of phase is an issue in the Radio Frequency (RF) elements of the transmit branches, such as the power amplifier and the duplex filters. These elements have been not designed to have the same phase or in general a controlled phase offset. Consequently, existing equipment has unknown phase offsets between the 2 transmit branches.

### SUMMARY OF THE INVENTION

In current networks with MIMO using two power amplifiers per sector, there is no means to know and control the phase difference between the two transmit paths, neither up to the power amplifier, nor end-to-end (i.e. up to the antenna port).

It is an object of the invention to provide a transmission system and corresponding method enabling the measurement and control of the phase difference between multiple transmit branches.

Consequently, according to the invention, a system and method according to the independent claims are provided. Favourable embodiments are defined in the dependent claims.

According to an aspect of the invention, a transmission system for use in a mobile communication network is provided comprising a first transmission branch for transmitting a first radio signal and a second transmission branch for transmitting a second radio signal on the same carrier as the first radio signal, characterised in that:
- the transmission system is configured to feed a same calibration signal to an input of the first transmission branch and an input of the second transmission branch during a phase calibration mode,
- the transmission system comprises detection means for detecting the phase difference introduced by the two transmission branches, by detecting the phase difference between the calibration signal, which has at least partly passed through the first transmission branch and the calibration signal, which has at least partly passed through the second transmission branch and
- the transmission system comprises control means for controlling the phase difference between the first and the second radio signal based on the detected phase difference.

As a result, a mechanism is provided for deriving the phase difference introduced by the transmit branches for multiple antenna transmit systems. This facilitates the optimization of the system based on an automatic calibration of the phase offset introduced by the multiple transmit branches. Multiple antenna transmission techniques such as MIMO may thus be optimized without impacting legacy users, bearing in mind that the phase offsets could vary on a cell or sector basis. The detection of the phase difference may be performed after or before the RF cables (connecting the final network element of the system to the antenna). The detection may even be performed within the antenna. However, it should always be performed after the power amplifiers and filters of the transmission branches.

The use of a calibration signal, for example a simple carrier signal at the relevant frequency band without any modulation, is essential to the feasibility of the integration of the phase difference detection means in the transmission system. If the calibration were to be performed using the radio signals according to the mobile network standard, e.g. 3G signals, the phase difference detection means would be complex and costly (in case of 3G a complete 3G receiver would be needed to detect the phase of the signals and thereby the phase difference between them).

Although, the present invention is particularly advantageous for use mobile communication networks with MIMO, it may be employed in any other mobile communication network where the phase offset between multiple transmission branches is an issue.

According to an embodiment of the invention, the transmission system uses Virtual Antenna Mapping (VAM), which has been explained herein above. In this case, the phase difference between the two transmission branches is used as an input to the VAM function to ensure the right VAM phase matrix is applied for controlling the phase difference between the first and the second radio signal. This is achieved by applying a phase offset between the weights corresponding to different branches.

If the first transmission branch and the second transmission branch are configured to operate on a first carrier frequency and the transmission system is configured to additionally operate on a second carrier frequency, preferably during the phase calibration mode all traffic data is transmitted and received on the first carrier frequency. In this way service interruption is avoided. Similarly, the calibration requiring switch-off of traffic on the second carrier can be done whilst the first frequency carrier is in operation.

According to a further embodiment of the invention, the detection means are integrated in an antenna or directly connected to a first and second input port of the antenna. As a result, the end-to-end (i.e. including the RF cables) phase difference of the multiple transmission branches is measured. The detection means are configured to signal the detected phase difference to a network element comprising the power amplifiers of the first and the second transmission branches, typically the Node-B or Base Band Unit (BBU), where it is supplied to the entity performing the VAM function.

Alternatively, the means for detecting the phase difference are integrated in the network element comprising the power amplifiers of the first and the second transmission branches. In this case the phase difference of the multiple transmission branches is measured directly after the power amplifiers and filters. To achieve the desired phase difference and thereby the desired polarization at the antennas it should be made sure that any phase shift in the transmission branches after the network element (e.g. RF cables) is known and controlled.

According to a further aspect of the invention, a method is provided for use in a transmission system in a mobile communication network, the transmission system comprising a first transmission branch for transmitting a first radio signal and a second transmission branch for transmitting a second radio signal on the same carrier as the first radio signal, characterised in that:
- a same calibration signal is fed to an input of the first transmission branch and an input of the second transmission branch during a phase calibration mode,
- the phase difference introduced by the two transmission branches, is detected by detecting the phase difference between the calibration signal, which has at least partly passed through the first transmission branch and the calibration signal, which has at least partly passed through the second transmission branch and
- the phase difference is controlled between the first and the second radio signal based on the detected phase difference.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawings, in conjunction with the accompanying specification, in which:
Figure 1 shows a prior art generic downlink transmitter structure to support MIMO.
Figure 2 shows the principle of the prior art Virtual Antenna Mapping technique.
Figure 3 shows a first embodiment of the invention, wherein the phase difference detection is performed in a base station.
Figure 4 shows a second embodiment of the invention, wherein the phase difference detection is performed in a Remote Radio Unit.
Figure 5 shows a third embodiment of the invention, wherein the phase difference detection is performed at the antenna input ports.
Figure 6 shows the principle of the phase difference detection means.

Throughout the figures like reference numerals refer to like elements.

### DETAILED DESCRIPTION OF THE PRESENT INVENTION

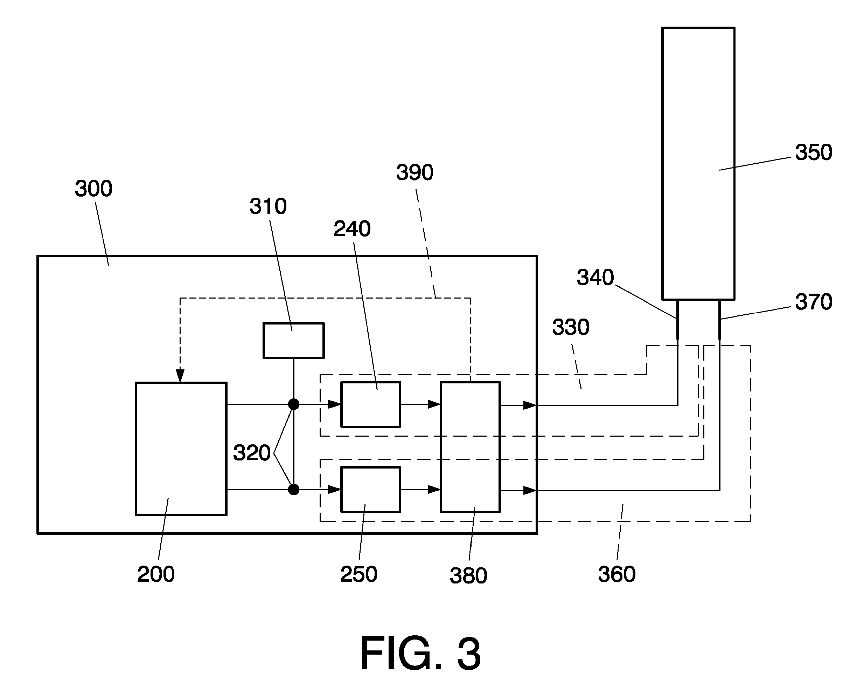

Figures 3-5 show three different embodiments of the transmission system of the invention.

According to the first embodiment, as shown in figure 3, the calibration is performed at Node B (base station) 300. A calibration signal generator 310 generates a calibration signal 320, which is fed to the inputs of a first RF transmission branch 330 up to the first antenna port 340 of the antenna arrangement 350 (which consists of two physical antennas each one radiating one of the radio signals) and a second RF transmission branch 360 up to the second antenna port 370 of the antenna arrangement 350. Apart from the power amplifier 240,250 each of the transmission branches 330,360 comprises other RF components, such as duplex filters (not shown) and RF cables. The components of the RF transmission branches are not designed to have the same phase or a controlled phase difference.

A Phase Detection Module (PDM) 380 measures the phase difference between the two transmission branches thanks to a calibration signal of the first and second transmission branch at the input of the antenna connector cables between the node B 300 and the antenna arrangement 350 and provides a signal 390 with this information to the entity performing the VAM function 200.

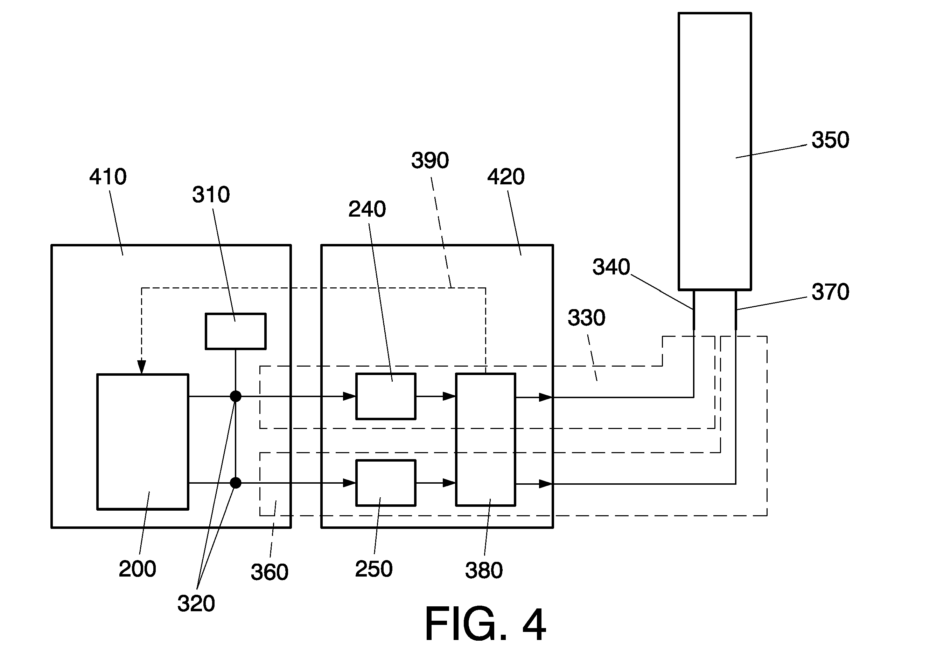

According to a second embodiment as shown in figure 4 the calibration signal 320 is applied to the input of the transmission branches in the Base Band Unit (BBU) 410 in the distributed Node B concept and the phase detection module 380 is implemented in the Remote Radio Unit (RRU) 420.

This type of solution allows controlling the phase up to the antenna connectors of the Node B (or RRU). To achieve the desired polarization radiated at the antenna this requires making sure any phase shift introduced in the transmission branches after the Node B is known and controlled. One possibility is to use for the connectors from Node B to antenna the same RF cable length to make sure that the phase difference at the inputs of the antenna arrangement 350 remains unchanged with respect to the phase difference at the input of the antenna connectors. The VAM entity can then compensate the phase difference in its weighting in order to achieve the desired polarization of the signals once radiated over the air. This would be performed typically as an Operations and Maintenance (O&M) function to periodically make sure that the polarization is correct. The VAM function 200 controls the phase difference between the first and the second radio signal by applying the right VAM phase matrix offset. Referring now to figure 2, this is achieved by applying a phase offset between the weights corresponding to different branches i.e. between **ω**₅ and **ω**₆ as well as between **ω**₇ and **ω**₈. This phase offset aims at compensating the phase difference that exist between the two branches. For example if the selected VAM matrix is aiming at emulating a circular polarisation at the antenna connector (90° phase difference between the two branches at the antenna port), assuming the phase difference measured between the two branches is **θ** then the VAM matrix should compensate this phase difference by applying 90-**θ** instead of 90 in weight **ω₆**. As explained above the VAM matrix is selected according to certain performance requirements, in order to ensure the actual transmission radiated by the antenna is according to the defined matrix the phase offsets needs to be applied to the selected matrix.

The implementation according to the first and second embodiment allows controlling the phase up to the antenna connector of the Node B 300 or RRU 420. To achieve that the signal radiated at the antenna arrangement 350 has the desired polarization, it is required that any phase shift introduced in the transmission branches after the Node B/RRU is known and taken into account for controlling the phase difference between the radio signals. For example, antenna connectors having the same RF cable length may be used between Node B/RRU and the antenna arrangement to make sure that the phase difference at the antenna arrangement remains unchanged.

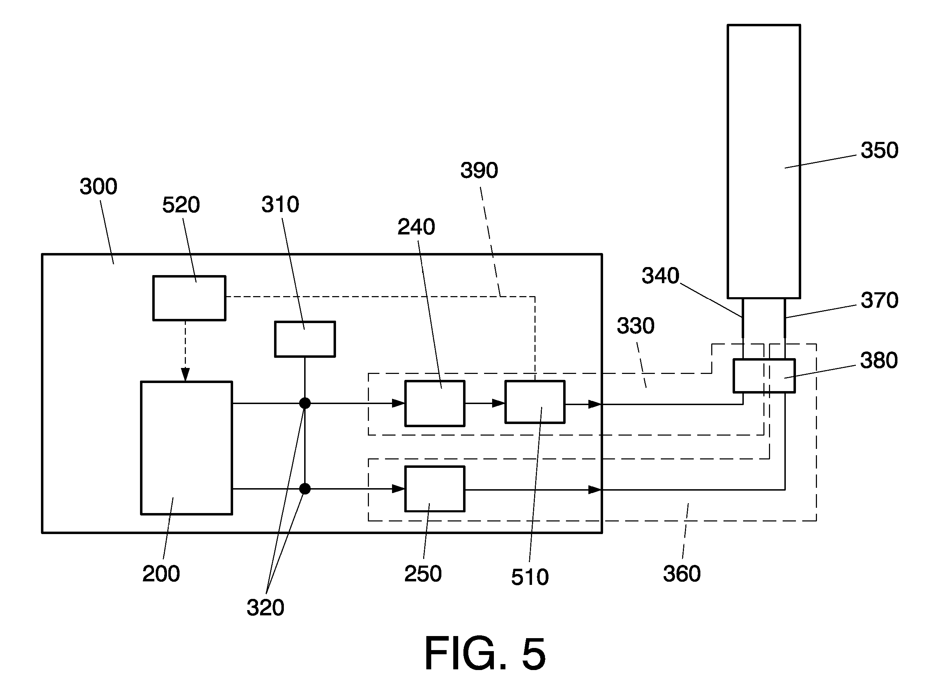

According to a third embodiment, in order to have full control of the phase of the signals at the input ports of the antenna arrangement 350, the phase difference detection is performed by means of a phase detection module (PDM) integrated to the antenna or an external module directly connected to the antenna ports 340,370, as shown in Figure 5. The PDM 380 signals the measured phase offset back to the Node B as an input to the VAM entity 200, similarly to well known Remote Electrical Tilt systems. The signalling message may be sent using the Iuant interface according to the 3GPP Iuant standard - adapted from the specifications from the Antenna Interface Standards Group (AISG) - defined in 3GPP TS25.460 UTRAN Iuant Interface General Aspects and Principles Release 6, 3GPP TS25.461 UTRAN Iuant Interface Layer 1, Release 6, 3GPP TS25.462 UTRAN Iuant Interface Signalling Transport, Release 6 and 3GPP TS25.463 UTRAN Iuant Interface Remote Electrical Tilting (RET), to an AISG duplexer 510. An AISG interface module 520 converts the signalling message into a format usable by the VAM function 200.

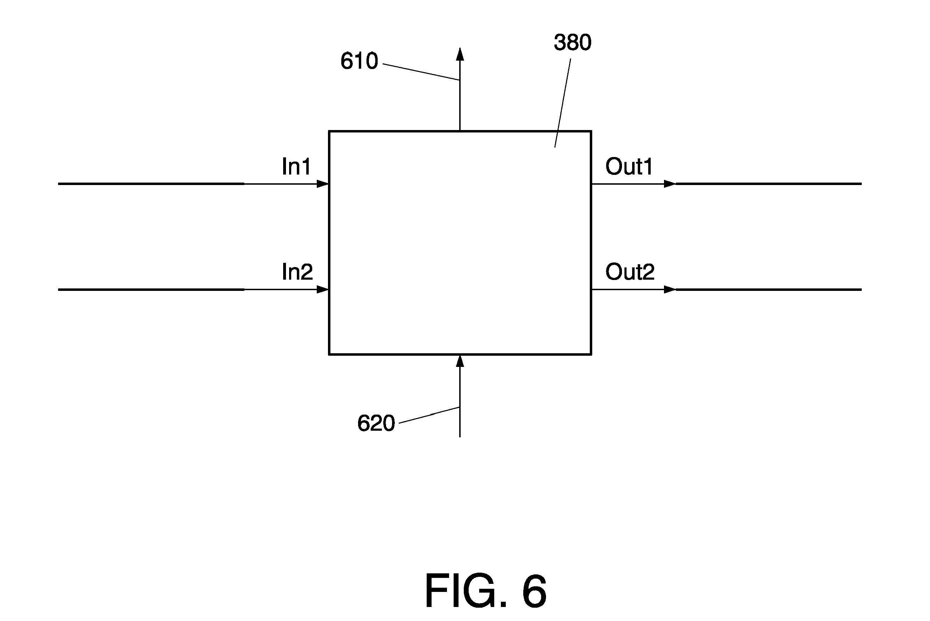

In order to facilitate the phase detection the O&M function can generate in baseband or in the radio units the same calibration signal at the input of the two RF transmission branches, as explained herein above with reference to figures 3-5. A preferred option is to use a simple carrier signal at the relevant frequency band without any modulation. For example to calibrate a MIMO system in the 2.1 GHz band in the calibration mode the 2.1 GHz carrier signal may be transmitted on both transmission branches. Using such a simple calibration signal allows to use off-the-shelf RF phase detector components to measure the difference of the phase. As a result the implementation and cost of the PDM module is kept to a minimum. The phase detection module principle is depicted in figure 6.

The PDM module is made of a simple RF phase detector and a digital part which handles the processing of the phase measurement as well as the transmission of the phase difference information to the VAM entity 200 over the relevant interface 610 (e.g. if located close to the antenna a Remote Electrical Tilt-like interface can be used, as described herein above). A control input 620 is used to set the PDM to the calibration mode or the normal operation mode. When the calibration mode is ON the PDM derives the phase difference of the calibration signals at its RF inputs In1,In2 and feeds it as an input to the VAM entity. When the calibration mode is OFF the PDM is transparent, the RF outputs Out1,Out2 are mapped directly to the RF inputs In1,In2 with minimized insertion loss.

MIMO is typically deployed in cell sites with more than one carrier. Hence in order to avoid service interruption during the calibration of the phase, the calibration is preferably performed during an off-peak period, when there is no or low traffic on one carrier. For example, in a 2 carrier site (e.g. 3 sectors each one with 2 carriers) with Rel'99 & HSDPA on a first frequency carrier f1 and HSDPA & MIMO on a second frequency carrier f2, f2 can be switched-off for a short period of time when there is no or low data traffic. Data traffic is then handled in the first frequency band f1 during the calibration period. The recalibration of the VAM phase matrix should be fairly seldom (e.g. monthly), as once calibrated the phase drifts are limited. For sites supporting operation with more than 2 carriers, it is possible to activate an extra carrier for calibration purposes. This has the advantage of avoiding any potential traffic interruption.

The system according to the present invention may be implemented in any type of radio access nodes used in mobile communication networks, such as Base Radio Transceiver Stations (BTS), Node B's or in Evolved Nodes-B (eNB) in a Long Term Evolution (LTE) cellular communication network, currently being standardised and also often referred to as the fourth generation (4G) cellular network.

While the invention has been illustrated and described in detail in the drawings and foregoing description, such illustration and description are to be considered illustrative or exemplary and not restrictive; the invention is not limited to the disclosed embodiments.

For example, although an implementation of the present invention in a mobile communication network with MIMO has been described, it may be implemented in any other type of mobile communication network wherein the phase difference between multiple transmitted RF signals is relevant. Furthermore, the use of the present invention is not limited to two RF signals, it may also be used for calibration phase differences between three RF-signals or more, for example in case of MIMO 4x4.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. Transmission system for use in a mobile communication network, the transmission system comprising a first transmission branch (330) for transmitting a first radio signal and a second transmission branch (360) for transmitting a second radio signal on the same carrier as the first radio signal, **characterised in that**:
- the transmission system is configured to feed a calibration signal (320) to an input of the first transmission branch and an input of the second transmission branch during a phase calibration mode,
- the transmission system comprises detection means (380) for detecting the phase difference introduced by the two transmission branches by detecting the phase difference between the calibration signal, which has at least partly passed through the first transmission branch and the calibration signal, which has at least partly passed through the second transmission branch and
- the transmission system comprises control means (200) for controlling the phase difference between the first and the second radio signal based on the detected phase difference.

2. Transmission system according to claim 1, **characterised in that** the control means (200) are configured for controlling the phase difference between the first and second radio signal by adapting phase weights applied to input signals of the control means.

3. Transmission system according to claim 1 or 2, **characterised in that** the first transmission branch and the second transmission branch are configured to operate on a first frequency carrier and that the transmission system is configured to additionally operate on a second frequency carrier, wherein during the phase calibration mode all traffic data is transmitted and received on the first frequency carrier.

4. Transmission system according to any one of the claims 1-3, **characterised in that** the detection means are integrated in a network element (300,420) comprising the power amplifiers of the first and the second transmission branches.

5. Transmission system according to any one of the claims 1-3, **characterised in that** the detection means (380) are integrated in an antenna (350) or directly connected to a first and second input port (340,370) of the antenna.

6. Transmission system according to claim 5, **characterised in that** the detection means are configured to signal the detected phase difference to a network element (300,420) comprising the power amplifiers (240,250) of the first and the second transmission branches.

7. Network element (300) comprising the transmission system according to any one of the claims 1-4.

8. Method of operating a transmission system in a mobile communication network, the transmission system comprising a first transmission branch (330) for transmitting a first radio signal and a second transmission branch (360) for transmitting a second radio signal on the same carrier as the first radio signal, **characterised in that**:
- a same calibration signal (320) is fed to an input of the first transmission branch and an input of the second transmission branch during a phase calibration mode,
- the phase difference introduced by the two transmission branches is detected by detecting the phase difference between the calibration signal, which has at least partly passed through the first transmission branch and the calibration signal, which has at least partly passed through the second transmission branch and
- the phase difference between the first and the second radio signal is controlled based on the detected phase difference.
